# EUROPÄISCHE PATENTANMELDUNG

(11) **EP 1 881 688 A1**
(43) Veröffentlichungstag der Anmeldung: **23.01.2008**
(21) Anmeldenummer: 06076452.9
(22) Anmeldetag: 19.07.2006
(51) Int. Cl.: H04M 15/00

(54) **Verfahren zum Auswählen eines Kontos für eine Abrechnung eines mittels eines Kommunikationsnetzes angebotenen Dienstes**

(71) Anmelder: SIEMENS AKTIENGESELLSCHAFT, 80333 München (DE)
(72) Erfinder: Eicke, Bertolt, 14169 Berlin (DE); Lorene, Hoerner, Dipl.-Ing., 10585 Berlin (DE)

(57) **Zusammenfassung**

Die Erfindung betrifft ein Verfahren zum Auswählen eines Kontos für eine Abrechnung eines mittels eines Kommunikationsnetzes angebotenen Dienstes. Bei diesem Verfahren wird von einem Kommunikationsendgerät (1) eines Dienstnutzers ein Dienst angefordert (S1), welcher von einem Dienstserver (4, 4') angeboten wird. Von einem Kommunikationsnetzelement (3, 4') wird eine den angeforderten Dienst betreffende Abrechnungsnachricht an ein Abrechnungssystem (6) übertragen (S2). Von dem Abrechnungssystem wird festgestellt, dass für die Abrechnung des angeforderten Dienstes mindestens zwei Konten (K1, K2, K3) zur Verfügung stehen. Daraufhin wird eine Auswahlnachricht mit Informationen über die zur Verfügung stehenden Konten an das Kommunikationsendgerät (1) übertragen (S6), und nach einer endgeräteseitigen Auswahl eines der Konten werden Informationen über das ausgewählte Konto (K1) an das Abrechnungssystem übertragen (S8). Dadurch wird das Abrechnungssystem in die Lage versetzt, den angeforderten Dienst über das ausgewählte Konto abzurechnen.

## Beschreibung

Die Erfindung betrifft ein Verfahren zum Auswählen eines Kontos für eine Abrechnung eines mittels eines Kommunikationsnetzes angebotenen Dienstes.

In modernen Kommunikationsnetzen, beispielsweise im Internet oder in zugangsbeschränkten Intranets, wird Dienstnutzern eine Vielzahl unterschiedlichster Dienste angeboten. Diese Dienste werden von Server-Rechnern (Servern) angeboten und können mittels Kommunikationsendgeräten, welche Client-Rechner (Clients) umfassen, genutzt werden. Zur Dienstabrechnung ist den Dienstnutzern üblicherweise ein Konto zugeordnet, welches mit Gebühren für die genutzten Dienste belastet wird. Bei diesen Konten kann es sich um vorausbezahlte Konten (Prepaid-Konten, Guthaben-Konten) handeln oder um Konten, bei denen die verbuchten Gebühren zu einem späteren Zeitpunkt beispielsweise mittels einer an die Dienstnutzer gesendeten Rechnung von diesen eingefordert werden (Postpaid-Konten).

Wenn einem Dienstnutzer mehr als ein Konto zugeordnet werden soll, z.B. ein privates Konto, ein Firmenkonto und/oder ein Familienkonto, dann ergibt sich die Frage, welches dieser Konten für die Abrechnung eines bestimmten Dienstes zu verwenden ist. Dabei ist es denkbar, dass von vornherein festgelegt ist, dass ein bestimmter Dienst über ein bestimmtes Konto abgerechnet wird oder dass die Kontenauswahl über die Tageszeit oder über Dienstparameter erfolgt. Ein solches Verfahren wäre allerdings starr und unflexibel.

Der Erfindung liegt die Aufgabe zugrunde, ein Verfahren anzugeben, mit dem auf eine einfache, zuverlässige und bequeme Art und Weise ein Konto für die Abrechnung eines angebotenen Dienstes ausgewählt werden kann.

Diese Aufgabe wird erfindungsgemäß gelöst durch ein Verfahren zum Auswählen eines Kontos für eine Abrechnung eines mittels eines Kommunikationsnetzes angebotenen Dienstes, wobei bei dem Verfahren
- von einem Kommunikationsendgerät eines Dienstnutzers ein Dienst angefordert wird, welcher von einem Dienstserver angeboten wird,
- von einem (an der Erbringung des angeforderten Dienstes beteiligten) Kommunikationsnetzelement eine den angeforderten Dienst betreffende Abrechnungsnachricht an ein Abrechnungssystem übertragen wird,
- von dem Abrechnungssystem festgestellt wird, dass für die Abrechnung des angeforderten Dienstes mindestens zwei Konten zur Verfügung stehen,
- eine Auswahlnachricht mit Informationen über die zur Verfügung stehenden Konten an das Kommunikationsendgerät übertragen wird, und
- nach einer endgeräteseitigen Auswahl eines der Konten Informationen über das ausgewählte Konto an das Abrechnungssystem übertragen werden, wodurch das Abrechnungssystem in die Lage versetzt wird, den angeforderten Dienst über das ausgewählte Konto abzurechnen. Dabei ist insbesondere vorteilhaft, dass zeitnah nach Anforderung des Dienstes (und z.B. vor Erbringung des Dienstes) das Kommunikationsendgerät mittels der Auswahlnachricht über die für die Abrechnung zur Verfügung stehenden Konten informiert wird, woraufhin eines dieser Konten für die Abrechnung ausgewählt werden kann. Dadurch kann das Verfahren insbesondere für Prepaid-Kunden bzw.
   Prepaid-Konten eingesetzt werden. Dabei kann bei jeder Dienstanforderung ein anderes Konto aus den zur Verfügung stehenden Konten ausgewählt werden. Dadurch ergibt sich ein sehr flexibles Verfahren. Vorteilhafterweise kann unmittelbar nach Anforderung des Dienstes durch den Dienstnutzer oder durch dessen Kommunikationsendgerät die Auswahl getroffen werden.
   Das erfindungsgemäße Verfahren kann so ablaufen, dass die Auswahlnachricht mit Informationen über die zur Verfügung stehenden Konten an das Kommunikationsendgerät übertragen wird, indem
- die Informationen über die für die Abrechnung des angeforderten Dienstes zur Verfügung stehenden Konten von dem Abrechnungssystem zu dem Kommunikationsnetzelement übertragen werden,
- von dem Kommunikationsnetzelement diese Informationen zu einem bestimmten Server (im Folgenden auch als Redirect-Server oder Umleitungs-Server bezeichnet) übertragen werden,
- von dem Server daraufhin die Auswahlnachricht erstellt wird, und
- von dem Server die Auswahlnachricht an das Kommunikationsendgerät übertragen wird.
   Hierbei wird vorteilhafterweise die Auswahlnachricht von dem Server erstellt und von dem Server an das Kommunikationsendgerät übertragen. Dabei können vorteilhafterweise die bekannten Mechanismen einer Web Architektur verwendet werden. Dadurch ist das erfindungsgemäße Verfahren insbesondere in Web- oder WAP-basierten Kommunikationsnetzen (beispielsweise im Internet oder in Firmen-Intranets) anwendbar.
   Das Verfahren kann so ablaufen, dass von dem Kommunikationsnetzelement die Informationen über die für die Abrechnung des angeforderten Dienstes zur Verfügung stehenden Konten zu dem Server übertragen werden, indem
- diese Informationen an das Kommunikationsendgerät gesendet werden, und
- von dem Kommunikationsendgerät diese Informationen zu dem Server umgeleitet werden.
   Dieser Ausgestaltungsform des erfindungsgemäßen Verfahrens ermöglicht es, eine in Web-basierten Kommunikationsnetzen als solche bekannte Umleitung bei dem erfindungsgemäßen Verfahren einzusetzen. Durch die Anwendung einer üblicherweise für andere Zwecke vorgesehenen Umleitung zum Auswählen des Kontos wird eine aufwendige und kostenintensive Neuentwicklung von neuen Informationsübertragungsmechanismen vermieden.
   Das Verfahren kann so ablaufen, dass die Informationen über das ausgewählte Konto an das Abrechnungssystem übertragen werden, indem
- von dem Kommunikationsendgerät diese Informationen an einen Server übertragen werden,
- von dem Server diese Informationen an das Kommunikationsnetzelement übertragen werden, und
- von dem Kommunikationsnetzelement diese Informationen an das Abrechnungssystem übertragen werden.
   Dabei kann die Datenübertragung zwischen dem Kommunikationsendgerät und dem Server unter Nutzung einer als solches bekannten Client-Server-Architektur in einfache Weise realisiert werden.
   Das Verfahren kann auch so ablaufen, dass von dem Server die Informationen über das ausgewählte Konto an das Kommunikationsnetzelement übertragen werden, indem
- diese Informationen an das Kommunikationsendgerät gesendet werden, und
- von dem Kommunikationsendgerät diese Informationen zu dem Kommunikationsnetzelement umgeleitet werden.
   Diese Datenübertragung lässt sich ohne kostenintensive Notwendigkeit einer Neuentwicklung von Datenübertragungsmechanismen mittels der als solches für andere Zwecke bekannten Umleitungs-Datenübertragungsmechanismen realisieren.

Das Verfahren kann so ablaufen, dass nach Übertragung der Informationen über das ausgewählte Konto an das Abrechnungssystem das Kommunikationsnetzelement den angeforderten Dienst erbringt oder den angeforderten Dienst betreffende Daten zu dem Kommunikationsendgerät weiterleitet. Dabei ist vor Erbringung des Dienstes bzw. vor Weiterleitung der den Dienst betreffenden Daten festgelegt, über welches Konto der Dienst abgerechnet wird.

Das Verfahren kann auch so ausgestaltet sein, dass zusätzlich Informationen über die Höhe einer für den angeforderten Dienst abzurechnenden Gebühr an das Kommunikationsendgerät übertragen werden.
Dadurch liegt vorteilhafterweise bei der Kontenauswahl auf Seiten des Kommunikationsendgerätes eine Information über die Höhe der Gebühr vor, die z. B. für die Auswahl eines geeigneten Kontos berücksichtigt werden kann. So kann z. B. vermieden werden, dass ein Konto ausgewählt wird, dessen Kontostand zur Abrechnung einer bestimmten Gebühr nicht ausreichend ist.

Das Verfahren kann weiterhin so ausgestaltet sein, dass nach Erhalt der Informationen über die Höhe der Gebühr seitens des Kommunikationsendgeräts die Anforderung des Dienstes abbrechbar ist.

Dabei kann die Höhe der Gebühr vorzugsweise zur Entscheidung verwendet werden, ob der Dienst angefordert werden soll oder ob die Anforderung des Dienstes abgebrochen werden soll, d.h. der Dienst nicht angefordert werden soll. Diese Entscheidung kann z. B. anhand von vorgewählten Schwellwerten getroffen werden.

Das Verfahren kann so ausgestaltet sein, dass das Kommunikationsnetzelement der Dienstserver ist.
Bei dieser Ausgestaltungsvariante ist besonders vorteilhaft, dass bei dem den Dienst anbietenden Dienstserver üblicherweise genaue Informationen über den Dienst vorliegen, welche zur Ermittlung der Höhe der für den Dienst abzurechnenden Gebühr herangezogen werden können.

Das Verfahren kann auch so ausgestaltet sein, dass das Kommunikationsnetzelement ein Gateway ist.
Hierbei ist vorteilhaft, dass der Dienstserver zur Realisierung des erfindungsgemäßen Verfahrens nicht modifiziert zu werden braucht, sondern dass ein Gateway des Kommunikationsnetzes zur Ausführung der Verfahrensschritte herangezogen wird. Vorteilhafterweise kann ein übliches Gateway verwendet werden, welches die Vergebührung z. B. durch Inspektion des Kommunikationsprotokolls HTTP (hypertext transfer protocol) unterstützt (sog. IP Proxy mit deep packet inspection).

Bei dem erfindungsgemäßen Verfahren kann ein Gateway verwendet werden, welches einen Datenaustausch zwischen dem Kommunikationsendgerät und dem Dienstserver ermöglicht.

Im Folgenden wird das erfindungsgemäße Verfahren anhand von Ausführungsbeispielen näher erläutert. Dabei ist in
- Figur 1: ein erstes Ausführungsbeispiel des erfindungsgemäßen Verfahrens und in
- Figur 2: ein zweites Ausführungsbeispiel des erfindungsgemäßen Verfahrens dargestellt.

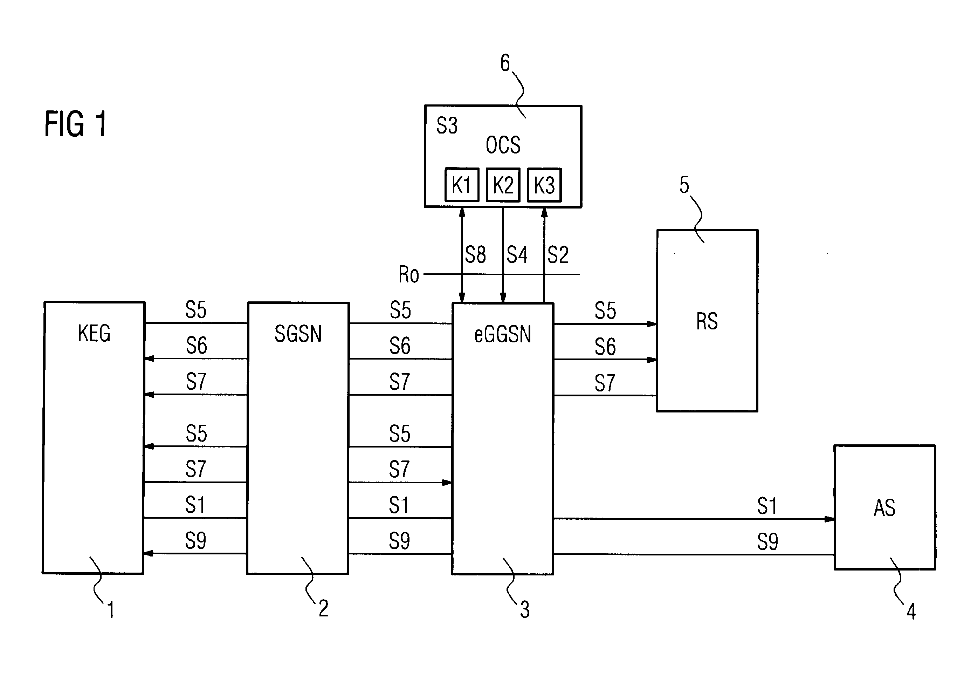

In Figur 1 ist ein Ausschnitt aus einem Kommunikationsnetz dargestellt. Dabei ist ein Kommunikationsendgerät 1 dargestellt, bei dem es sich im Ausführungsbeispiel um ein Mobiltelefon mit eingebautem Internet-Client (Web-Browser) handelt. In anderen Ausführungsbeispielen kann es sich bei dem Kommunikationsendgerät 1 jedoch beispielsweise auch um ein Mobiltelefon mit integriertem WAP-Client (WAP = Wireless Application Protocol), um einen tragbaren Rechner mit HTTP-Client oder WAP-Client oder um einen Arbeitsplatzcomputer handeln.

Das Kommunikationsendgerät 1 ist über eine Vermittlungsstelle 2 (im Ausführungsbeispiel als ein "Serving GPRS support node - SGSN" ausgestaltet) mit einem Gateway 3 verbindbar. Das Gateway 3 ist ein an der Erbringung des angeforderten Dienstes beteiligtes Kommunikationsnetzelement, welches einen Datenaustausch zwischen dem Kommunikationsendgerät und einem Dienstserver 4 ermöglicht. Die Daten (z. B. sog. "http-Verkehr") werden über das Gateway 3 übertragen, welches als Proxy-Rechner agiert. Das Gateway 3 überwacht den den angeforderten Dienst betreffenden Datenverkehr und erfasst die für den Dienst benötigte Zeit und/oder das für den Dienst übertragene Datenvolumen für eine zeit- und/oder volumenbasierende Vergebührung. Bei dem Gateway 3 handelt es sich im Ausführungsbeispiel um ein "3GPP Rel. 6 Gateway GPRS Support Node (GGSN)" mit der Funktionalität "Flow Based Charging", welche beschrieben ist in der Schrift "3GPP TS 23.125 V6.8.0 (2006-03), Technical Specification, 3rd Generation Partnership Project; Technical Specification Group Services and System Aspects; Overall high level functionality and architecture impacts of flow based charging; Stage 2, (Release 6)".

Das Kommunikationsendgerät 1 ist über die Vermittlungsstelle 2 und das Gateway 3 mit dem Dienstserver 4 verbunden (Dienstserver = Application Server, AS), welcher einen Dienst anbietet. Ein solcher Dienst kann beispielsweise das Bereitstellen von bestimmten Daten, das Beschaffen von Informationen über das Internet oder eine Verarbeitung von Daten umfassen. Weiterhin ist ein Server 5 dargestellt, welcher über das Gateway 3 und die Vermittlungsstelle 2 mit dem Kommunikationsendgerät 1 verbindbar ist. Dieser Server stellt einen "Umleitungs-Server" (redirect server, RS) dar, weil - wie unten näher erläutert - dieser Server 5 mittels einer Nachrichtenumleitung über das Kommunikationsendgerät 1 mit dem Gateway 3 kommuniziert.

Weiterhin ist ein Abrechnungssystem 6 dargestellt, von dem eine Reihe von Konten für Dienstnutzer verwaltet wird. Im Ausführungsbeispiel ist dies ein Online Charging System (OCS), welches z.B. aus der Schrift "3GPP TS 32.296 V6.2.0 (2005-09), Technical Specification, 3rd Generation Partnership Project; Technical Specification Group Service and System Aspects; Telecommunication management; Charging management; Online Charging System (OCS): Applications and interfaces, (Release 6)" bekannt ist. Der das Kommunikationsendgerät 1 nutzende Dienstnutzer ist bei dem Abrechnungssystem 6 registriert. Für diesen Dienstnutzer werden von dem Abrechnungssystem ein erstes Konto K1, ein zweites Konto K2 und ein drittes Konto K3 verwaltet. Bei dem ersten Konto K1 handelt es sich im Ausführungsbeispiel um ein privates Konto, bei dem zweiten Konto K2 um ein von der Familie des Dienstnutzers gemeinsam genutztes Kontos und bei dem dritten Konto K3 um ein geschäftliches Konto der Firma, bei der der Dienstnutzer angestellt ist. Die Vergebührung für die mittels des Kommunikationsendgerätes 1 angeforderten und genutzten Dienste erfolgt über die Konten K1, K2 und K3. Bei diesen Konten handelt es sich im Ausführungsbeispiel um Guthabenkonten (Prepaid-Konten, Prepaid-Accounts) die mit einer sogenannten Online-Vergebührung behandelt werden. Solche Konten können aber auch als Postpaid-Konten (nach Dienstnutzung zu belastende Konten) ausgestaltet sein, wenn sie ebenfalls mit einer Online-Vergebührung behandelt werden.

Der Dienstnutzer ist Kunde eines Mobilfunkbetreibers, welcher die notwendige Infrastruktur für den Betrieb des Kommunikationsendgerätes 1 bereitstellt. Auf die Darstellung von Details dieser Infrastruktur wie Basisstationen und ähnliches wird in den Figuren verzichtet.

Mittels seines mobilen internetfähigen Kommunikationsendgerätes 1 startet der Dienstnutzer eine Internet-Sitzung und fordert einen Dienst an, der von dem Dienstserver 4 bereitgestellt wird. Dazu gibt der Dienstnutzer die Adresse (URL = Uniform Ressource Locator) des auf Basis des Hypertext Transfer Protokolls HTTP arbeitenden Dienstservers 4 ein. Eine entsprechende Dienstanforderungsnachricht (HTTP Request), welche an den Dienstserver 4 gerichtet ist, gelangt von dem Kommunikationsendgerät 1 über die Vermittlungsstelle 2 an das Gateway 3. Das Gateway 3 (welches im Ausführungsbeispiel als ein Proxy-Rechner ausgestaltet ist), erkennt anhand der Adresse des Dienstservers 4 und anhand weiterer mit der Dienstanforderungsnachricht übermittelter Informationen über die Art des angeforderten Dienstes, dass dieser Dienst gebührenpflichtig ist, dass also die Nutzung des von dem Dienstserver 4 angeforderten Dienstes mittels des Abrechnungssystems 6 abzurechnen ist.

Daraufhin erstellt das Gateway 3 eine Abrechnungsnachricht (charging request), welche den angeforderten Dienst betrifft, und sendet diese Abrechnungsnachricht über eine Abrechnungsschnittstelle Ro (Online-Interface, welches auf dem Protokoll DIAMETER basiert) an das Abrechnungssystem 6. Mit der Abrechnungsnachricht werden auch Informationen über das den Dienst anfordernde Kommunikationsendgerät 1 und/oder den Nutzer dieses Kommunikationsendgerätes an das Abrechnungssystem übertragen. Ebenso werden mit der Abrechnungsnachricht Informationen über den angeforderten Dienst an das Abrechnungssystem übertragen (Schritt S2).

Das Abrechnungssystem 6 ermittelt nun anhand der mit der Abrechnungsnachricht empfangenen Informationen, anhand von in dem Abrechnungssystem gespeicherten Informationen über den Dienstnutzer bzw. dessen Kommunikationsendgerät und über den angeforderten Dienst, dass für die Abrechnung des angeforderten Dienstes mindestens zwei Konten zur Verfügung stehen: Im Ausführungsbeispiel stehen drei Konten zur Verfügung, nämlich das erste Konto K1, das zweite Konto K2 und das dritte Konto K3 (Schritt S3).

Daraufhin übermittelt das Abrechnungssystem 6 Informationen über die für die Abrechnung des angeforderten Dienstes zur Verfügung stehenden Konten K1, K2 und K3 an das Gateway 3. Diese Informationen umfassen eine Liste der verfügbaren Konten K1, K2 und K3. Im Abrechnungssystem 6 sind unter den Voreinstellungen die Informationen abgespeichert, dass die Kontoauswahl mittels eines Redirect-Verfahrens (Umleitungsverfahrens) erfolgen soll. Daher wird neben der Liste mit den zur Verfügung stehenden Konten auch eine Adresse des Servers 5 an das Gateway 3 übermittelt. Als Adresse des Servers 5 wird eine URL (Uniform Ressource Locator) verwendet, diese Adresse kann auch als eine "Umleitungs-Adresse", "Umleitungs-URL" bzw. "Redirect-URL" bezeichnet werden. Weiterhin übermittelt das Abrechnungssystem 6 an das Gateway 3 eine für den Server 5 bestimmte Anweisung ("account selection"), eine Kontenauswahl durchzuführen (Schritt S4)und unterbricht zunächst die Weiterleitung der Dienstanforderungsnachricht an den Dienstserver 4.

Das Gateway 3 veranlasst dann die Umleitung über das Kommunikationsendgerät an den Server 5. Von dem Gateway 3 (Kommunikationsnetzelement 3) werden die Informationen über die zur Verfügung stehenden Konten sowie die Anweisung, eine Kontenauswahl durchzuführen, zu dem Server 5 übertragen. Dies erfolgt, indem diese Informationen und die Adresse des Servers 5 an das Kommunikationsendgerät 1 gesendet werden. Daraufhin werden die Informationen von dem Kommunikationsendgerät 1 selbsttätig zu dem Server 5 weitergeleitet (umgeleitet), ohne dass dies ein Eingreifen des Dienstnutzers erfordert (Schritt S5). Der Umleitungsmechanismus als solcher ist z.B. aus den Patentschriften US 6,226,677 B1 "Controlled communications over a global computer network" und US 6,636,894 B1 "Systems and methods for redirecting users having transparent computer access to a network using a gateway device having redirection capability" bekannt. Der bekannte Mechanismus wird auch kurz als Umleitung oder "redirection" bezeichnet.

Der Server 5 erstellt daraufhin eine Auswahlnachricht mit Informationen über die zur Verfügung stehenden Konten und überträgt diese Auswahlnachricht über das Gateway 3 und die Vermittlungsstelle 2 an das Kommunikationsendgerät 1 (Schritt S6). Auf der Anzeige des Kommunikationsendgeräts wird daraufhin für den Dienstnutzer die Information ausgegeben, dass eine Abrechnung des von ihm angeforderten Dienstes mittels der Konten K1, K2 oder K3 möglich ist. Da der Nutzer einen Dienst angefordert hat, der nur für ihn privat von Interesse ist, will er diesen Dienst über sein privates Konto K1 abrechnen lassen. Daher gibt der Nutzer mittels der Tastatur seines Mobiltelefons 1 die Information ein, dass der Dienst über das Konto K1 abgerechnet werden soll. Es wird also eine Auswahl des Kontos K1 durchgeführt. Informationen über das ausgewählte Konto K1 (im Ausführungsbeispiel ist das die Information, dass das Konto K1 für die Abrechnung des angeforderten Dienstes ausgewählt wurde) werden von dem Kommunikationsendgerät 1 über die Vermittlungsstelle 2 und das Gateway 3 an den Server 5 übertragen. Diese Datenübertragung findet ebenfalls im Schritt S6 statt.

Daraufhin werden von dem Server 5 diese Informationen über das ausgewählte Konto K1 zusammen mit einer Adresse des Gateways 3 an das Kommunikationsendgerät 1 gesendet, woraufhin das Kommunikationsendgerät 1 diese Informationen zu dem Gateway 3 umleitet. Hierzu wird wieder der als solches bekannte Umleitungsmechanismus (redirection) verwendet (Schritt S7). Die Adresse des Gateways 3 (Ursprungsadresse der ersten Umleitung) war in dem Server 5 zwischengespeichert worden, die zweite Umleitung erfolgt zu der Ursprungsadresse, also zu dem Gateway 3.

Schließlich sendet das Kommunikationsnetzelement 3 (Gateway 3) die Informationen über das ausgewählte Konto K1 an das Abrechnungssystem 6 weiter (Schritt S8). Diese Weitersendung der Informationen über das ausgewählte Konto K1 erfolgt im Ausführungsbeispiel durch Übertragung einer weiteren Abrechnungsnachricht, welche die Information enthält, dass der angeforderte Dienst über das Konto K1 abgerechnet werden soll. Das Abrechnungssystem rechnet dann die Dienstnutzung auf dem Konto K1 ab. Das Abrechnungssystem nimmt dabei eine Reservierung der für den angeforderten Dienst abzurechnenden Gebühr auf dem Konto K1 vor oder bucht die Gebühr von dem Konto K1 ab und sendet - sofern die Reservierung oder Abbuchung erfolgreich verlaufen ist - eine Bestätigungsnachricht an das Gateway 3 zurück. (Das Abrechnungssystem quittiert also die weitere Abrechnungsnachricht und teilt dem Gateway 3 mit, dass die Abrechnung erfolgreich verlaufen ist.) Dies erfolgt ebenfalls im Schritt S8.

Das Abrechnungssystem 6 wurde also in die Lage versetzt, den angeforderten Dienst über das ausgewählte Konto K1 abzurechnen. Auf die positive Quittierung der weiteren Abrechnungsnachricht hin leitet das Gateway 3 jetzt die zunächst aufgehaltene Dienstanforderungsnachricht an den Dienstserver 4 weiter und leitet daraufhin von dem Dienstserver 4 stammenden Dienst-Nutzdaten an das Kommunikationsendgerät weiter, so dass der Dienst mittels des Kommunikationsendgerätes 1 genutzt werden kann (Schritt S9). Es werden also nach der Übertragung der Informationen über das ausgewählte Konto K1 an das Abrechnungssystem 6 von dem Gateway 3 die den angeforderten Dienst betreffenden Daten zu dem Kommunikationsendgerät weitergeleitet.

In dem mittels der Figur 1 beschriebenen Ausführungsbeispiel wurde ein Kommunikationsnetzelement 3 in Form eines Proxyrechners verwendet, welcher als Gateway GGSN mit Flow Based Charging Funktionalität ausgestaltet ist. Dieses Gateway ist als solches aus der Druckschrift 3GPP (Rel. 6) TS 23.125 (siehe oben) bekannt. Im Ausführungsbeispiel erfolgt die Auswahl des Kontos mittels dieses Gateways 3.

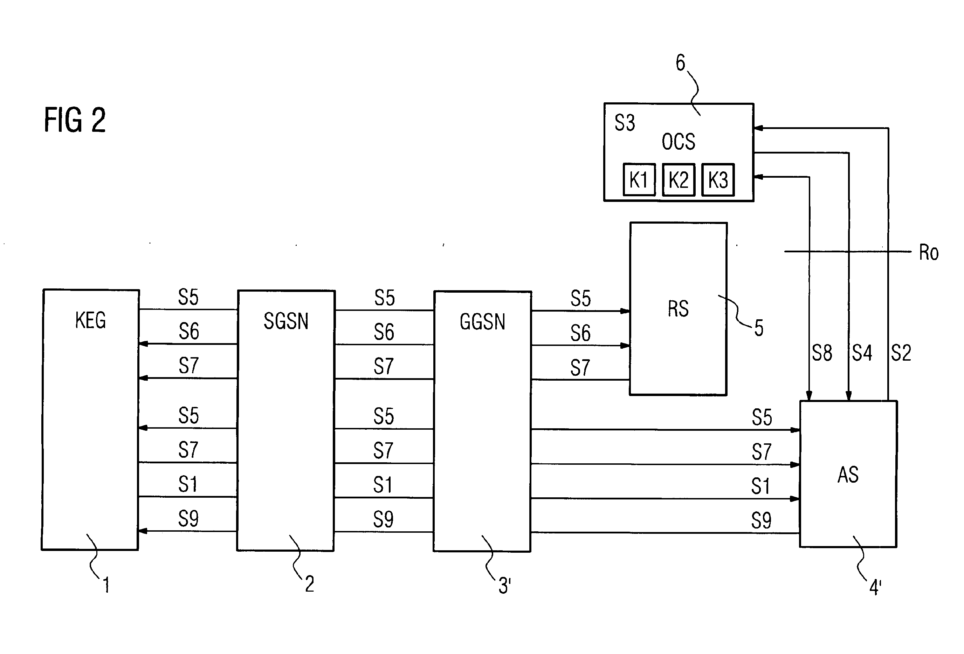

In Figur 2 ist ein weiteres Ausführungsbeispiel dargestellt, bei dem die Vergebührung und die Auswahl des Kontos unter Beteiligung eines Kommunikationsnetzelements in Form des Dienstservers 4 erfolgt.

In Figur 2 ist ein Kommunikationsendgerät 1, eine Vermittlungsstelle 2, ein Server 5 und ein Abrechnungssystem 6 dargestellt, welche den in Verbindung mit Figur 1 beschriebenen Elementen entsprechen. Weiterhin ist ein Gateway 3' dargestellt, das jedoch im Unterschied zur Figur 1 nicht mit dem Abrechnungssystem 6 verbunden ist. Vielmehr ist das Abrechnungssystem 6 mit einem Dienstserver 4' verbunden, welcher über eine entsprechende Schnittstelle verfügt. Bei dem Gateway 3' ist jedoch keine Schnittstelle zur Verbindung mit dem Abrechnungssystem 6 notwendig, der Dienstserver 4' ist hier an der Vergebührung beteiligt.

Das Verfahren nach der Figur 2 läuft über weite Strecken ähnlich ab wie das im Zusammenhang mit der Figur 1 beschriebene Verfahren. Zunächst startet der Dienstnutzer eine Internet-Sitzung und wählt die Adresse des Dienstservers 4 an. Er fordert damit einen Dienst an, welcher von dem Dienstserver 4 angeboten wird. Eine entsprechende Dienstanforderungsnachricht wird von dem Kommunikationsendgerät 1 über die Vermittlungsstelle 2 und das Gateway 3' an den Dienstserver 4' übertragen. In dem Gateway 3' sind die Informationen abgespeichert, dass bei einer Internet-Sitzung mit einer Anforderung dieses Dienstes der Dienstserver 4' für die Abrechnung zuständig ist und führt daher keine Verfahrensschritte zur Abrechnung des angeforderten Dienstes durch (Schritt S1). Im Unterschied zum Verfahren nach der Figur 1 sendet der Dienstserver 4' eine den angeforderten Dienst betreffende Abrechnungsnachricht an das Abrechnungssystem 6 (Schritt S2).

Das Abrechnungssystem 6 stellt fest, dass für die Abrechnung des angeforderten Dienstes die drei Konten K1, K2 und K3 zur Verfügung stehen (Schritt S3). Diese Informationen über die für die Abrechnung des angeforderten Dienstes zur Verfügung stehenden Konten K1, K2 und K3 werden von dem Abrechnungssystem 6 zu dem Dienstserver 4' übertragen, welcher ein Kommunikationsnetzelement des Kommunikationsnetzes darstellt (Schritt S4). In diesem Schritt S4 wird also eine Liste der verfügbaren Konten K1, K2 und K3, eine Anweisung an den Server 5, eine Kontenauswahl vorzunehmen, sowie eine Umleitungs-Adresse (URL) des Servers 5 zu dem Dienstserver 4' übertragen.

Der Dienstserver 4' übermittelt die Informationen über die für die Abrechnung des angeforderten Dienstes zur Verfügung stehenden Konten an das Kommunikationsendgerät 1, woraufhin das Kommunikationsendgerät 1 diese Informationen mittels der Umleitungs-Adresse (URL) an den Server 5 umleitet (Schritt S5).

Der Server 5 erstellt daraufhin, wie im Zusammenhang mit Figur 1 beschrieben, die Auswahlnachricht und sendet diese an das Kommunikationsendgerät 1. Beim Kommunikationsendgerät 1 findet daraufhin die Auswahl eines Kontos statt. In diesem Ausführungsbeispiel wird wieder das Konto K1 ausgewählt und Informationen über das ausgewählte Konto K1 werden von dem Kommunikationsendgerät 1 an den Server 5 übertragen (Schritt S6).

Die Informationen über das ausgewählte Konto K1 werden von dem Server 5 zusammen mit einer Umleitungs-Adresse (URL) des Dienstservers 4' an das Kommunikationsendgerät 1 gesendet. Daraufhin leitet das Kommunikationsendgerät 1 diese Informationen selbsttätig zu dem Dienstserver 4' um, welcher hier ein Kommunikationsnetzelement ist (Schritt S7). Schließlich werden von dem Kommunikationsnetzelement 4' (Dienstserver 4') die Informationen über das ausgewählte Konto an das Abrechnungssystem übertragen (Schritt S8).
Diese Übertragung erfolgt mittels einer weiteren Abrechnungsnachricht (charging request).

Wie im Zusammenhang mit Figur 1 erläutert, nimmt daraufhin das Abrechnungssystem 6 eine Reservierung oder Abbuchung der Gebühr von dem gewählten Konto K1 vor und sendet bei erfolgreicher Reservierung oder Abbuchung eine Quittierungsnachricht an den Dienstserver 4' zurück. Dies erfolgt ebenfalls im Schritt S8. Bei dem Dienstserver 4' liegt nun die Information vor, dass die Abrechnung erfolgreich stattgefunden hat. Daraufhin antwortet der Dienstserver 4' auf die Dienstanforderungsnachricht (S1) des Kommunikationsendgeräts 1 und erbringt den angeforderten Dienst. Beispielsweise sendet der Dienstserver 4' angeforderte Daten an das Kommunikationsendgerät 1 (Schritt S9). Der Dienstnutzer kann also den angeforderten Dienst nutzen und der angeforderte Dienst wird mittels des Kontos K1 abgerechnet. Bei dem beschriebenen Ausführungsbeispiel wird nach Übertragung der Informationen über das ausgewählte Konto K1 an das Abrechnungssystem von dem Dienstserver 4' der Dienst erbracht.

Zur Anforderung des Dienstes im Schritt S1 kann insbesondere ein sogenannter "http-request" genutzt werden, auf den der Dienstserver 4 im Schritt S9 mittels einer Antwortnachricht antwortet.

Das erfindungsgemäße Verfahren kann insbesondere in paketvermittelten Kommunikationsnetzen bei HTTP-basierten bzw. mit WAP-basierten Diensten verwendet werden. Dadurch ist es vorteilhaft möglich, für von HTTP-Servern oder WAP-Servern angebotene Dienste ein Konto zur Dienstabrechnung auszuwählen. Da beispielsweise im Internet oder in Intranets eine große Anzahl von Diensten mittels solcher Server angeboten wird, ermöglicht das beschriebene Verfahren für eine Vielzahl solcher HTTP- bzw. WAP-basierten Dienste eine Auswahl eines Kontos aus einer Mehrzahl von zur Verfügung stehenden Konten eines Dienstnutzers. Solche HTTP-basierte Dienste sind beispielsweise Download von Daten oder Streaming von Daten mittels Internet-Datenübertragungsverfahren (WEB) oder Mobilfunk-Datenübertragungsverfahren (WAP).

In weiteren Ausführungsbeispielen kann die endgeräteseitige Auswahl des Kontos (anstelle mittels eines Dialogs mit dem Dienstnutzer) auch anhand von Nutzereinstellungen des Kommunikationsendgeräts 1 von dem Kommunikationsendgerät 1 selbsttätig vorgenommen werden.
Die mittels der Figuren 1 und 2 erläuterten Ausführungsbeispiele können auch dergestalt erweitert werden, dass zusätzlich Informationen über die Höhe der für den angeforderten Dienst abzurechnenden Gebühr an das Kommunikationsendgerät übertragen werden (advice-of-charge). Nach Erhalt dieser Informationen besteht dann seitens des Kommunikationsendgeräts die Möglichkeit, die Anforderung des Dienstes abzubrechen oder aber die Anforderung des Dienstes zu bestätigen(Benutzerbestätigung). Beispielsweise kann dann auf einer Anzeige des Kommunikationsendgeräts 1 folgender Text ausgegeben werden:
"Der angeforderte Dienst kostet 3 €/min. Möchten Sie diesen Dienst über
1 = Privatkonto,
2 = Familienkonto,
3 = Geschäftskonto oder
4 = gar nicht nutzen?".
   Die Information über die Höhe der Gebühr wird vom Abrechnungssystem 6 geliefert und mittels der Umleitungs-Techniken an das Kommunikationsendgerät 1 übertragen.

Es wurde ein Verfahren beschrieben, bei dem ein Nutzer eines z.B. Internet-basierten oder WAP-basierten Dienstes auswählen kann, über welches seiner Konten der Dienst abgerechnet werden soll. Diese Auswahl erfolgt jeweils bei Anforderung/Nutzung des Dienstes, beispielsweise mittels einer Interaktion zwischen Dienstnutzer und Kommunikationsendgerät. Der Dienstnutzer (subscriber) erhält dadurch vorteilhafterweise die Möglichkeit, mit einem einzigen Kommunikationsendgerät Dienste zu nutzen und die Dienstanforderung/Dienstnutzung flexibel und fallabhängig auf unterschiedlichen Konten (Privatkonten, Firmenkonten, Familienkonten o.ä.) zu vergebühren/abzurechnen. Für den Zugriffsberechtigten auf ein Firmenkonto ergibt sich dabei z.B. der Vorteil, dass dieser Zugriffsberechtigte die von ihm (z.B. mittels seines Firmen-Kommunikationsendgeräts) fallweise privat genutzten Dienste über sein Privatkonto abrechnen kann, ohne sich für die private Nutzung von solchen Diensten privat ein zusätzliches Kommunikationsendgerät anschaffen zu müssen (welches stets über sein Privatkonto abgerechnet wird). Der Mobilfunkbetreiber kann ein sowohl für Privatpersonen als auch für Firmen attraktives Vergebührungsverfahren anbieten.

## Patentansprüche

1. Verfahren zum Auswählen eines Kontos für eine Abrechnung eines mittels eines Kommunikationsnetzes angebotenen Dienstes, wobei bei dem Verfahren
- von einem Kommunikationsendgerät (1) eines Dienstnutzers ein Dienst angefordert (S1) wird, welcher von einem Dienstserver (4, 4') angeboten wird,
- von einem Kommunikationsnetzelement (3, 4') eine den angeforderten Dienst betreffende Abrechnungsnachricht an ein Abrechnungssystem (6) übertragen (S2) wird,
- von dem Abrechnungssystem (6) festgestellt wird, dass für die Abrechnung des angeforderten Dienstes mindestens zwei Konten (K1, K2, K3) zur Verfügung stehen,
- eine Auswahlnachricht mit Informationen über die zur Verfügung stehenden Konten an das Kommunikationsendgerät (1) übertragen (S6) wird, und
- nach einer endgeräteseitigen Auswahl eines der Konten Informationen über das ausgewählte Konto (K1) an das Abrechnungssystem (6) übertragen (S8) werden, wodurch das Abrechnungssystem (6) in die Lage versetzt wird, den angeforderten Dienst über das ausgewählte Konto (K1) abzurechnen.

2. Verfahren nach Anspruch 1,
**dadurch gekennzeichnet, dass**
die Auswahlnachricht mit Informationen über die zur Verfügung stehenden Konten (K1, K2, K3) an das Kommunikationsendgerät übertragen wird, indem
- die Informationen über die für die Abrechnung des angeforderten Dienstes zur Verfügung stehenden Konten (K1, K2, K3) von dem Abrechnungssystem (6) zu dem Kommunikationsnetzelement (3, 4') übertragen werden,
- von dem Kommunikationsnetzelement (3, 4') diese Informationen zu einem Server (5) übertragen werden,
- von dem Server (5) daraufhin die Auswahlnachricht erstellt wird, und
- von dem Server (5) die Auswahlnachricht an das Kommunikationsendgerät (1) übertragen wird.

3. Verfahren nach Anspruch 2,
**dadurch gekennzeichnet, dass**
von dem Kommunikationsnetzelement (3, 4') die Informationen über die für die Abrechnung des angeforderten Dienstes zur Verfügung stehenden Konten zu dem Server (5) übertragen werden, indem
- diese Informationen an das Kommunikationsendgerät (1) gesendet werden, und
- von dem Kommunikationsendgerät (1) diese Informationen zu dem Server (5) umgeleitet werden.

4. Verfahren nach einem der vorhergehenden Ansprüche,
**dadurch gekennzeichnet, dass**
die Informationen über das ausgewählte Konto an das Abrechnungssystem (6) übertragen werden, indem
- von dem Kommunikationsendgerät (1) diese Informationen an einen Server (5) übertragen werden,
- von dem Server (5) diese Informationen an das Kommunikationsnetzelement (3, 4') übertragen werden, und
- von dem Kommunikationsnetzelement (3, 4') diese Informationen an das Abrechnungssystem (6) übertragen werden.

5. Verfahren nach Anspruch 4,
**dadurch gekennzeichnet, dass**
von dem Server (5) die Informationen über das ausgewählte Konto an das Kommunikationsnetzelement (3, 4') übertragen werden, indem
- diese Informationen an das Kommunikationsendgerät (1) gesendet werden, und
- von dem Kommunikationsendgerät (1) diese Informationen zu dem Kommunikationsnetzelement (3, 4') umgeleitet werden.

6. Verfahren nach einem der vorhergehenden Ansprüche,
**dadurch gekennzeichnet, dass**
- nach Übertragung der Informationen über das ausgewählte Konto (K1) an das Abrechnungssystem das Kommunikationsnetzelement (3, 4') den angeforderten Dienst erbringt oder den angeforderten Dienst betreffende Daten zu dem Kommunikationsendgerät (1) weiterleitet.

7. Verfahren nach einem der vorhergehenden Ansprüche,
**dadurch gekennzeichnet, dass**
- zusätzlich Informationen über die Höhe einer für den angeforderten Dienst abzurechnenden Gebühr an das Kommunikationsendgerät (1) übertragen werden.

8. Verfahren nach Anspruch 7,
**dadurch gekennzeichnet, dass**
- nach Erhalt der Informationen über die Höhe der Gebühr seitens des Kommunikationsendgeräts (1) die Anforderung des Dienstes abbrechbar ist.

9. Verfahren nach einem der vorhergehenden Ansprüche,
**dadurch gekennzeichnet, dass**
- das Kommunikationsnetzelement der Dienstserver (4') ist.

10. Verfahren nach einem der Ansprüche 1 bis 8,
**dadurch gekennzeichnet, dass**
- das Kommunikationsnetzelement ein Gateway (3) ist.

11. Verfahren nach Anspruch 10,
**dadurch gekennzeichnet, dass**
- das Gateway (3) einen Datenaustausch zwischen dem Kommunikationsendgerät (1) und dem Dienstserver (4, 4') ermöglicht.
